# EUROPEAN PATENT APPLICATION

(11) **EP 0 571 893 A2**
(43) Date of publication of application: **01.12.1993**
(21) Application number: 93108195.4
(22) Date of filing: 19.05.1993
(51) Int. Cl.: G06E 3/00, G06G 7/60

(54) **Image analysis apparatus**

(30) Priority: 29.05.1992 US 890997
(71) Applicant: International Business Machines Corporation, Armonk, N.Y. 10504 (US)
(72) Inventor: Camp, William O., Jr., Ithaca, New York 14850 (US)
(74) Representative: Schäfer, Wolfgang, Dipl.-Ing.

(57) **Abstract**

For image analysis apparatus an integrated circuit can perform specific pattern analysis with an image projected on the photodetector array processors which include current mirrors for receiving an image and processing in parallel the information in a received light signal. The photodetector array organizes and distributes light to provide a filter for providing a discrimination analysis path for a received light signal to process the received image for spectral analysis, for steering the angular direction of incoming light from an image, for color or grey scale analysis. A shutter mechanism enables differing kinds of image analysis. The integrated circuit has photodetectors replicated on the surface and normally a lens of polyimide deposited on the surface. When a lens shutter is employed it is adapted to be moved in a plane in an analog fashion to change the lateral position and thus change the dominant angle viewed by the photodetector by piezoelectric drivers which move the shutter just a very small amount.

## Description

### FIELD OF THE INVENTION

This invention relates to image analysis, particularly to apparatus which can employ optical sensors with imbedded processing, and particularly to silicon integrated circuits with photoreceptors and processors which will detect the presence of one of a set of patterns within an image focused on its surface.

During the detailed description which follows the following works will be referenced as an aid for the reader. These additional references are:
1. Mueller, P., et. al., "Design and Fabrication of VLSI Components for a General Purpose Analog Neural Computer," Analog VLSI Implementation of Neural Systems, Kluwer Academic Publishers, 1989.
2. Nabet, B., et. al., "Analog Implementation of Shunting Neural Networks," Neural Information Processing Systems 1, Denver, 1988.
3. Le Cun, et. al., "Handwritten Digit Recognition with a Back-Propagation Network," Neural Information Processing Systems 2, Denver, 1989.
4. Faggin, F., et. al., "Neural Network Analog VLSI Implementations.," Neural Information Processing Systems, Denver, 1991.
5. Lyon, R., "The Optical Mouse, and an Architectural Methodology for Smart Digital Sensors," CMU Conference on VLSI Systems and Computations, 1981.
6. Delbruck, T., "A Chip that Focuses an Image on Itself," Analog VLSI Implementation of Neural Systems, Kluwer Academic Publishers, 1989.
7. Van der Spiegel, J., et. al., "A Foveated Retina-Like Sensor Using CCD Technology," Analog VLSI Implementation of Neural Systems, Kluwer Academic Publishers, 1989.
8. Boahen, K., Andreou, A., "A Contrast Sensitive Silicon Retina with Reciprocal Synapses," Neural Information Processing Systems, Denver, 1991.
9. Mead, C., "Adaptive Retina," Analog VLSI Implementation of Neural Systems, Kluwer Academic Publishers, 1989.
10. Daugman, J., "Complete Discrete 2-D Gabor Transforms by Neural Networks for Image Analysis and Compression," IEEE Trans. on Acoustics, Speech, and Signal Processing, vol. 36, No. 7, July 1988.

These additional references are incorporated by reference. They are referred to by number below.

As background for my invention it is noted that many neural networks have been implemented in integrated circuits, (1-3) for example, and that there are examples of such networks with optical inputs via photodetectors (4-9). I point out that all such networks have either had built into them the ability to be modified at will, or have a very restrictive implementation with a resistive network for calculating the Laplacian, or spatial derivative. Therefore, this prior art either has the capability I am espousing, but with a much more complicated implementation circuit and thus, consumes more integrated circuit area, or does not have the computational capability of my invention.

The present application is directed to applications of an integrated circuit which can compute with a parallel array image inputs to photodetectors arranged as pixel points on an integrated circuit. The circuit is discussed, and then applications and variations which can be made to the integrated circuit which enable it to be used in a wide variety of applications.

For image analysis apparatus an integrated circuit can perform specific pattern analysis with an image projected on the photodetector array processors which include current mirrors for receiving an image and processing in parallel the information in a received light signal. The photodetector array organizes and distributes light to provide a filter for providing a discrimination analysis path for a received light signal to process the received image for spectral analysis, for steering the angular direction of incoming light from an image, for color or grey scale analysis. A shutter mechanism enables differing kinds of image analysis. The integrated circuit has photodetectors replicated on the surface and normally a lens of polyimide deposited on the surface. When a lens shutter is employed it is adapted to be moved in a plane in an analog fashion to change the lateral position and thus change the dominant angle viewed by the photodetector by piezoelectric drivers which move the shutter just a very small amount. The image can be compressed by the receptor and displayed by a similar integrated circuit which has an LED display for projecting an image in parallel from the surface of said integrated circuit. An image which may be projected onto the device includes a fingerprint, printed or handwritten material, video image, or other pattern which can make use of the integrated circuit computational capability for such needs as require quick and immediate discrimination of an large amount of data which can be turned into an image form. The improvements which I have made achieve a large increase in the amount of computation per unit time and area that can be placed in an integrated circuit for a specific computational purpose.

These improvements are accomplished by providing a discrimination apparatus and a new integrated circuit which can accept various discriminated light images. The circuit has:
· A large input bandwidth to the integrated circuit (IC) by means of an array of photodetectors that translate an image projected onto the IC surface to many analog signals that are inputs to the processing network on the IC;
· A set of current sources that supply currents to internal nodes based on the signals from the photodetectors;
· A summing junction for the above currents at the internal nodes of the network;
· A comparator function to pass or not pass on a signal to a succeeding network layer based on whether the total current at an internal node is greater than or less than a threshold value for that node. The output of the comparator is processed into a current becomes the input to the next successive layer of the network.
· Any number of layers of current generation and summation at internal nodes and comparison to a threshold at each node; and
· Output nodes that convey information about the state of the network versus inputs to the outside world.

### Additional features of the invention are:

· The computation is represented in the current sources between nodes. In order to minimize the area needed for this computation, and thus maximize the computation per unit area, these current sources are fixed values, with the values set by the specific computational tasks to be accomplished.
· Current mirrors are used to further minimize the amount of circuits necessary to modify a single input signal as it passes to many nodes at the next stage. One can approach one transistor per computation with this approach.
· Light images focused on the array of photodetectors permits a large input bandwidth, circumventing a classic problem of input/output pad number limitations as IC are made larger and larger.
· All the necessary computation to accomplish a task is included on chip in order that the number of output pads can be reduced to further alleviate the input/output pad number limitation for large IC's.

The general effect of my invention will be to calculate multiple dot products between the image focused on the integrated circuit surface and many reference patterns built into the integrated circuit, and then give an output indication for all those reference patterns where the dot product exceeds a threshold. The threshold is externally controllable. The reference patterns are built into the design of the integrated circuit. The dot product is the sum of the individual multiplications between the voltage from the photodetector at a location and the reference value for that location. It effectively detects the presence of a pattern within the image focused on the integrated circuit surface.

That this invention can be of any value, if the reference patterns are fixed, is demonstrated in many articles discussing image analysis and compression. Daugman (10) discusses the use of Gabor functions as such basic patterns of image analysis and compression. Gabor functions are trigonometric like patterns that exist only over a limited 2 dimensional space. They may have one or many cycles of sinusoidal variation over the space, and the phase may be shifted relative to the position in the space. My example invention uses the first order Gabor functions as its internal set of reference patterns.

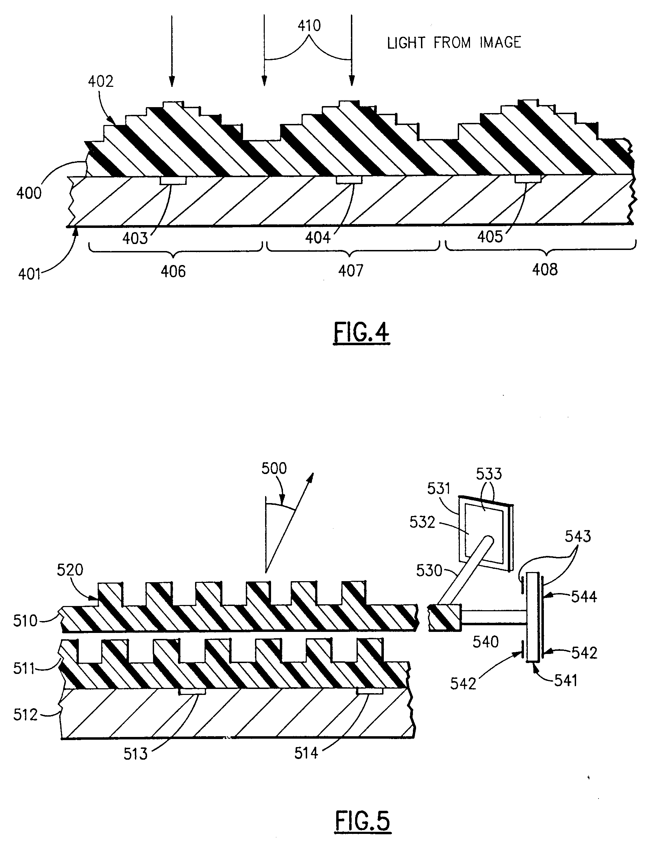

In its simplest embodiment, the processor is simply the integrated circuit with a lens (schematically 99 in FIGURE 3 to represent all input devices which I have detailed) in front of it to focus an image from the outside world onto the surface of the integrated circuit. This invention would also encompass implementations where the integrated circuit is coupled to an image source, with or without a lens. For example, the image source could be a cathode ray tube (CRT), or a photoemitter such as an array of laser or light emitting diodes, or a liquid crystal display (LCD) with light source. The lens would only be required if the image size needed to be changed or some physical limitation prevented the image source from being immediately adjacent to the integrated circuit. The advantage of having an image source such as a CRT, is that the position of the image can be moved across the integrated circuit, or the same image can be presented in multiple copies to many similar integrated circuits. This capability might prove very useful in intermediate stages of development when the number of components that can be put onto a single integrated circuit chip has not yet reached a level sufficient with that required to process all possible output responses in all possible positions on the input array. The problem can be divided among many such chips, each presented with the same input image. Furthermore, the image can be moved electronically with the CRT across the input array, reducing the amount of processing required internally of the chip. Of course, one can mechanically scan an input image across the integrated circuit input array in yet another implementation.

These and other improvements are set forth in the following detailed description. For a better understanding of the invention with advantages and features, reference may be had to the description and to the drawings.

FIGURE 1 shows schematically an overview of the preferred embodiment and particularly shows an 8 by 8 array of photodetectors with imbedded circuitry to detect the presence and orientation of a line of light. The width of the line of light must be equal to or greater than the spacing of two photodetectors and less than or equal to the spacing of four photodetectors. Alternative implementations can be made for other line widths and/or edges.

FIGURE 2 shows the reference patterns that are implemented in the preferred embodiment. They represent the 1st order Gabor functions, rotated in order to cover 6 possible orientations and shifted in position in order to cover 3 possible locations in the array for each orientation.

FIGURE 3 shows the extension of the apparatus shown in FIGURE 1 to multiple layers. This construction permits the refinement of the calculation through multiple stages. For instance, each layer would abstract information from the larger amount of information from the layer preceding it.

FIGURE 4 shows an image analysis apparatus in accordance with one preferred alternative embodiment of my invention, illustrating a lens system deposited on the integrated circuit.

FIGURE 5 shows an image analysis apparatus in accordance with another preferred alternative embodiment of my invention, illustrating the use of a shutter mechanism to enable differing kinds of image analysis.

FIGURE 6 shows schematically a preferred embodiment of my invention which utilizes an image analysis apparatus which is provided with color reception capability.

FIGURE 7 shows schematically another preferred embodiment of my invention which utilizes a composite lens, and an application of my invention for image spectral signature analysis.

FIGURE 8 shows my preferred embodiments, including the various alternative embodiments, which can be employed for data compression, transmission, and re-display.

FIGURE 9 shows schematically the display integrated circuit which receives the result of reception by the apparatus of FIGURES 1-3 via a transmission channel and displays the result at a remote point. This structure illustrates the circuit 340 of FIGURE 8 in more detail.

My detailed description explains the preferred embodiments of my invention, together with advantages and features, by way of example with reference to the following drawings.

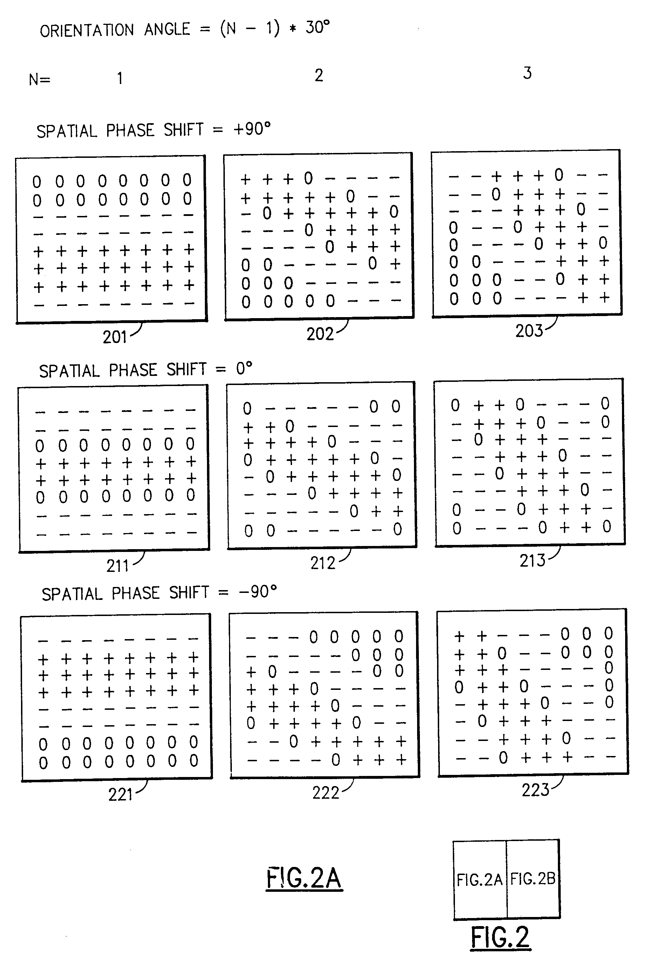

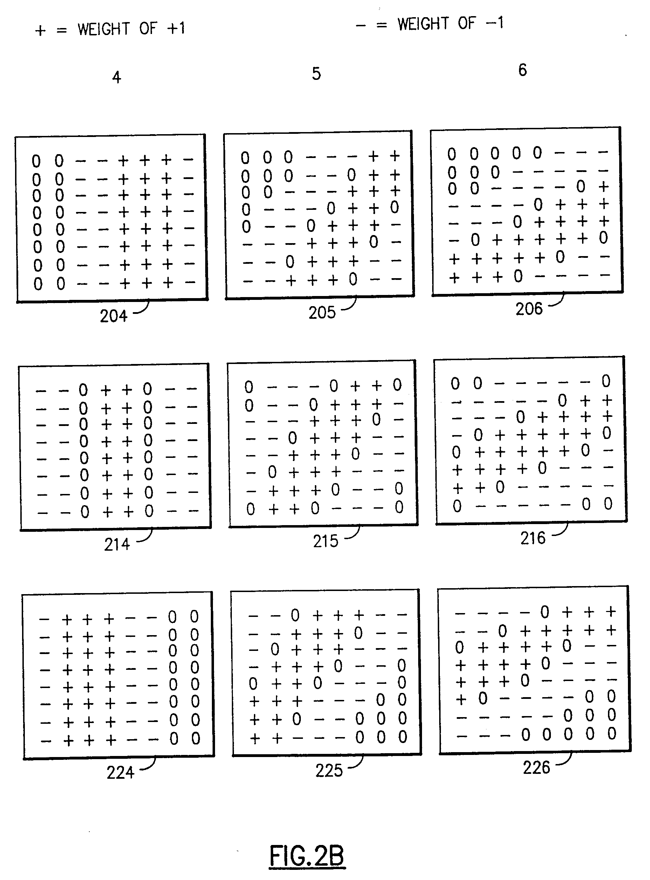

Before considering my preferred embodiments in detail, it may be worthwhile to illustrate, by way of example, the computational aspects of the invention described here and in the application entitled "Massive Computation in Integrated Circuits". An underlying concept is that of a current mirror, a device that can be used to reflect a current into many places simultaneously. So, an image, focused on the surface, causes a current to be generated at each photodetector. Each current, corresponding to the light intensity at a place on the image, is then reflected, via the current mirror, into many lines which then sum the total current for each internal pattern. The internal patterns (see FIGURE 2) are represented by the values of the current mirrors from the individual photodetectors to the various output lines. A threshold circuit is implemented with a constant current source to ground. Thus, an output will only occur when the summed current in a line is greater than the threshold current.

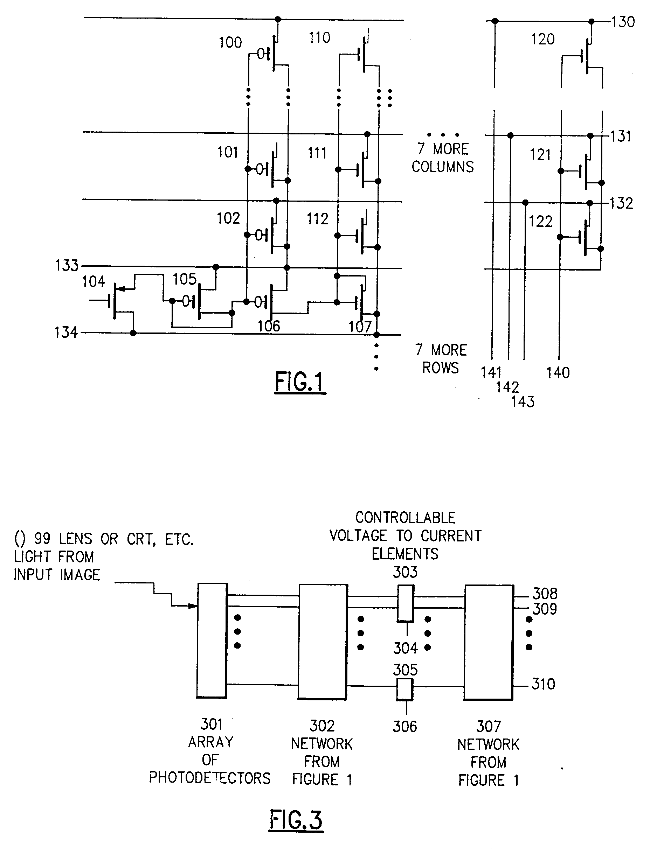

Turning now to my invention in greater detail, it will be seen from FIGURE 1 that illustrates my preferred embodiment in which, a bipolar transistor 104 reacts to the light intensity of an image focused on the surface and supplies current to PFET 105. PFET 105 is connected with drain and gate shorted together such that the voltage between line 133, connected to a supply voltage and the drain, when connected to similar PFETS 106,100,101, and 102 will cause a positive current to flow out of those PFETS that is proportional to the relative size of the gates of those PFETS and PFET 105, into electrical lines 130,131,132 and into NFET 107, and are commonly referred to as current mirrors. NFET 107 has its gate and drain shorted such that the voltage on its source, transmitted to NFETS 110, 111, and 112 causes a negative current proportional the relative sizes of the gates with that of the gate of NFET 107, to flow into electrical lines 130, 131, and 132, and are commonly referred to as current mirrors. For the cases where the input signal is multiplied by zero, for a particular output, there is no connection from either current mirror to that line summing the current for that output. NFETS 120, 121 and 122 are biased by line 140 to control the negative current supplied to electrical lines 130, 131, and 132, such that an output indication will only occur when the current in those lines exceeds zero. The number of electrical lines 130, 131, 132 is made as large as necessary to accommodate the total number of reference patterns: for the patterns 201-206, 211-216, and 221-226 shown in FIGURE 2, 18 electrical lines are needed. This schematic, less NFETS 120, 121, and 122 is repeated 7 more times in the horizontal direction, with electrical lines 130, 131 and 132 (and their extensions) connected to the PFETS and NFETS as dictated by the arrangement of values in the reference patterns. Furthermore, this extended schematic is then repeated 7 more times in the vertical direction, with the output electrical lines 130,131,132 (and their extensions) connected to the PFETS and NFETS as dictated by the arrangement of values in the reference patterns. Electrical lines 141,142,143 (and as many as needed for all the patterns required) are used to electrically connect all the currents between the rows. Thus, each photodetector supplies one current to each output for each reference pattern, via either a PFET for positive current or an NFET for a negative current, of via no connection for zero weight, and the amount of current is determined by the relative size of the PFET or NFET relative to the PFET 105 or NFET 107, respectively. In this connection, a comparison may be made with respect to FIGURE 1 and FIGURE 2, wherein the additional columns and rows would be structured to provide the results shown in FIGURE 2 in the circuit shown in FIGURE 1.

The preferred embodiment uses the reference patterns 201-206, 211-216, and 221-226 shown in FIGURE 2, where + means that the value of the photocurrent is passed to the electrical line with a positive sign, - means that the value of the photocurrent is passed to the electrical line with a negative sign, and 0 means that no current is passed to the electrical line.

Of course, many alternative patterns could be implemented for other purposes. And, the exact values and sizes of components can be adjusted for various reasons; lower current, more resolution, different line widths, edges, alternative patterns, etc.

Furthermore, it should be apparent that one can continue this approach to extend the computation, by adding more processing layers with a similar organization of current mirrors and threshold circuits, as well as by adding more devices in the horizontal directions. An alternative implementation is demonstrated in FIGURE 3. In this instance, the elements of FIGURE 1, less the array of photodetectors are treated as a single element, used multiple times, as elements 302 and 307. The array of photodetectors 301, couples to the processing network 302, which then couples to a set of elements 303 and 305 that can be individually controlled by signals 304 and 306, respectively, to change the voltage output from 302 into currents that couple to processing network 307, whose outputs are 308, 309 and 310. The diagram shows dots for one of the extensions that can be made to this arrangement. This arrangement permits multiple stages of calculation.

The foregoing circuits may be employed as an integrated circuit for image analysis. The circuits can be used alone, or modified in accordance with the applications and apparatus described in connection with FIGURES 4-9.

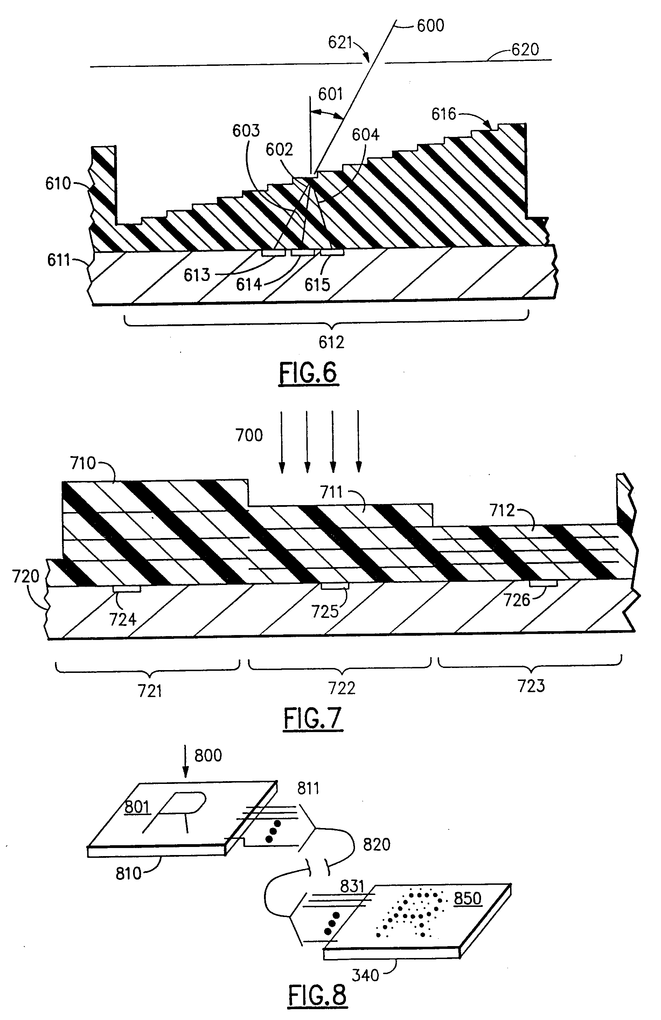

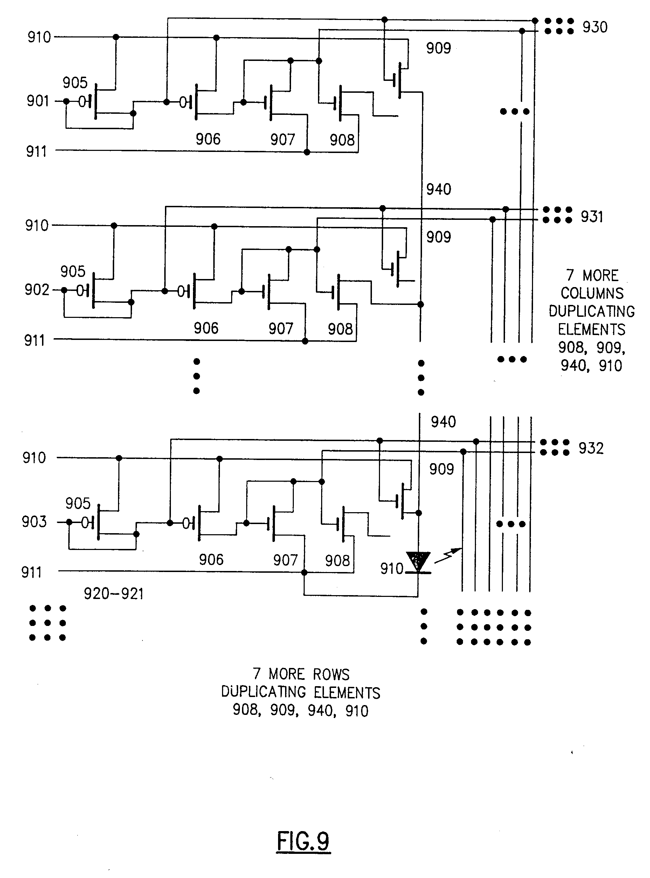

FIGURE 4 shows an image analysis apparatus in accordance with one preferred alternative embodiment of my invention, illustrating a lens system deposited on the integrated circuit. An image 410 is projected as light from the image onto an image analysis apparatus 400 which includes an integrated circuit 401 on which is deposited a lens 402. The integrated circuit has a plurality of photodetectors 403, 404, 405, and the current mirrors, computational circuits (summing circuits), and threshold circuits and other pixel area circuit elements in pixel circuit areas 406, 407, 408. The lens is made during the process of manufacture of the image analysis apparatus by deposition of a dielectric material, preferable a polyimide, and preferably shaped by etching. The polyimide (or equivalent layer which will physically transmit light) is etched so that a stepped lens structure, as illustrated schematically is formed for each pixel, causing the light received from the image to be transmitted to the photodetector circuit and integrated circuit we have previously described. While FIGURE 4 portrays a receptor, a similar lens formed on the integrated circuit could be used on the display device described with respect to FIGURES 8 and 9.

FIGURE 5 shows an image analysis apparatus in accordance with another preferred alternative embodiment of my invention, illustrating the use of a shutter mechanism to enable differing kinds of image analysis. In this alternative the integrated circuit 512 has photodetectors 513, 514, etc. replicated on the surface. Another version of a lens screen, in this case a sawtooth-in-cross section lens 511 is deposited on the integrated circuit. The lens can be manufactured by deposition of polyimide. Similarly manufactured, but stripped from the silicon, or cast, is another lens screen 510 which is mounted above the first lens screen, but adapted to be moved in the same plane in an analog fashion to change the lateral position and thus change the dominant angle 500 viewed by the photodetector. The amount of movement can be very small for the desired angle change. In my preferred embodiment the second lens screen is coupled to a piezeoelectric element 541 and 531, via connection elements 530 and 540, which causes movement in two lateral directions. The element piezeoelectric elements 531 and 541 are caused to move by electrical signals 533 and 543 impressed on electrodes 532 and 542 which have been deposited on the elements 531 and 541.

FIGURE 6 shows schematically a preferred embodiment of my invention which utilizes an image analysis apparatus which is provided with color reception capability. In my preferred embodiment described with respect to FIGURES 1-3 my device is one that can analyze grey scale and color. For my preferred color image, again a lens is deposited on the surface of the integrated circuit. The pixel area 612 has within it three photodetectors assigned a red 613, green 614, and blue 615 function As an alternative to the red, green, blue functions, an additional photoreceptor (not shown) could be provided. This additional photoreceptor could be assigned a grey scale component. The physical organization can be linear (as in a phosphor screen on a "Trinatron" TV tube, or in a triangular, diamond or square configuration, with some adjustment to the prism.) Additional photoreceptors can be assigned differing functions, and the physical spacing changed according to the best map for the number provided. The polyimide lens is stepped by the deposition or etching process to form an effective prism above each pixel area. By dispersion, the position of the photodetector is determined so as to intercept light of a specific bandwidth. This lens acts as a bandwidth filter and director. Thus, the lens is a bandwidth screen which organizes incoming light and directs it to a specific photodetector 613, 614, 615 assigned the function for the bandwidth selected by the bandwidth screen. The mask element 629 with opening 621 arranged similarly for each pixel area constrains the light 600 from the image to come only from the preferred angle 600 to achieve the desired dispersion.

FIGURE 7 shows schematically another preferred embodiment of my invention which utilizes a composite lens, and an application of my invention for image spectral signature analysis. FIGURE 7 also has a polyimide lens. However this lens is stepped to provide a spectral notching of incoming light, acting as a spectral filter, in contrast to a band-width filter utilized for color image filtering, as illustrated by FIGURE 6. The individual elements 710, 711, 712 over photodetectors 724, 725, 726 are preferably multilayer filters, or alternatively constructed to pass only a part of the spectrum.

As alternatives to the lenses shown in FIGURE 6 and FIGURE 7, which may receive a "real" image, images can be projected on the same image analysis apparatus for color and spectral analysis without employing the specific filter illustrated. The illustrated filters are the preferred embodiments of the invention in these aspects. Alternatives to a color bandwidth filter include a lens, a projection directed directly onto the assigned photoreceptors by direction of a beam position. The beam position can be controlled by a laser or a CRT raster. Alternatively also, color time lapsed alternation of light which has been separated by color can be used. For instance in a digitized image, various components of an image can be displayed as successive time intervals. The lens provides means for organizing light and assigning it to a specific photodetector which can analyze the received input to provide color reception.

FIGURE 8 shows my preferred embodiments, including the various alternative embodiments, which can be employed for data compression of an image 800, transmission, and redisplay. In FIGURE 8 the image surface 801 of the image analysis integrated circuit 810 receives an image 800 and couples it via output lines 811 via a transmission channel 820 to a display receiver 340 which receives the signals from outputs 130, 131, 132 (etc.) of the circuit of FIGURE 1 or FIGURE 3 emanating from the receptor receiver 810 which has the circuit described, by way of example, with respect to FIGURES 1-3. The display receiver 340 can have on it a spreading lens, similar to that described with respect to FIGURES 6 or 7 for projecting the image displayed on the surface of the integrated circuit display receiver 340. The circuit for display utilizes the current mirror teachings of the receptor receiver 810. Details of the configuration of the circuit for the display receiver 340 are discussed with reference to FIGURE 9.

FIGURE 9 shows schematically the display integrated circuit which receives the result of reception by the apparatus of FIGURES 1-3 via a transmission channel and displays the result at a remote point. This structure illustrates the circuit 340 of FIGURE 8 in more detail. It will be noted that the reverse operation from the device shown in FIGURES 1-3 is accomplished here. Thus, a few inputs 910, 902, .. 903 come to each array area on the integrated circuit for constructing an emitter image in an array of light emitting diodes (LEDs) 910 and similarly across the array (which is preferably 8x8 in the example). Again use is made of the current mirror concepts in order to construct the image. Input signal 901 couples to a PFET 905 with shorted gate and drain such that the voltage at the gate of PFET 905 is coupled to PFET 909 in each array position by element 930, 931..932 to create the positive current. Similarly PFET 906 and NFET 907 create a voltage for each pattern input signal 901, 902,...903 coupled by 930, 931, ... 932 to all sixty four array positions to create a unique negative current at each position in NFET 908. Line 940 collects the appropriate currents (which are determined by a pattern such as explained with reference to FIGURE 2) and couples it to a light emitting diode 910 at that pixel array position. Elements 908, 909, 940 and 910 are duplicated in the sixty four array positions of this example and fed by line elements 930, 931,...932.

There are many applications which can be considered for the devices described. Some potential applications of the devices include fingerprint recognition. Here a fingerprint or other similar pattern would be projected onto the device. The integrated circuit could process the entire image in parallel and provide an immediate discrimination and quantification of the analysis. This could then be stored by transmission over a channel device, or redisplayed at a display device.

Another application is in character recognition, whether it be a postal application or a check, or some other element which has printed or handwritten characters. The device could be used to immediately characterize and segment characters, and the integrated circuit could be directly used, or pass to a system for further analysis of the output of its parallel computations.

Another application is data compression. Data received could be immediately compressed for transmission.

Another application is color discrimination.

Another application is grey scale discrimination.

Other applications can make use of patterns of the integrated circuit computational capability for such needs as require quick and immediate discrimination of an immense amount of data which can be turned into an image form.

### GLOSSARY OF TERMS:

· IC - Integrated circuit. The illustrated integrated circuit includes field effect transistors, bipolar transistors and wiring to connect together many of these elements.
· Neural Network - A set of connections between nodes that modify the value of the signal passed from one node to the next. Often many connections impinge on a node, and the summation of values at the node is further modified by a nonlinear function such as a threshold and amplitude limiter. Values at the input nodes represent the signals to be evaluated by the network, and values at the outputs represent an evaluation by the network of the input signals. For instance, the input could be image pixels and the outputs could represent possible patterns to which the image could be assigned. The connections between nodes, sometimes called weights, are often determined and modified by training data, but they can also be prespecified in total or in part based on other information about the task of the network.
· PFET - Field Effect Transistor with p-type silicon channel. A three terminal device that conducts current based on the voltage impressed on a third terminal relative to the voltage on the terminal nearest the power supply.
· NFET - Field Effect Transistor with n-type silicon channel. A three terminal device that conducts current based on the voltage impressed on a third terminal relative to the voltage on the terminal nearest the supply ground.
· Bipolar Transistor - A three terminal device that conducts current based on the current supplied to a third terminal, or, in the case of the phototransistor used in this invention, based on the light level impinging on the active transistor region. While I have described my preferred embodiments of my invention, it will be understood that those skilled in the art, both now and in the future, may make make various improvements and enhancements which fall within the scope of the claims which follow. These claims should be construed to maintain the proper protection for the invention first disclosed.

## Claims

1. An image analysis apparatus comprising,
an integrated circuit,
photodetector means including current mirrors for receiving an image and processing in parallel the information in a received light signal,
said photodetector means including means for organizing and distributing light to provide a filter for providing a discrimination analysis path for a received light signal to process the received image.

2. An image analysis apparatus according to claim 1 wherein the discrimination analysis path is for spectral analysis; steering the angular direction of the incoming light; color discrimination; grey scale analysis; image analysis.

3. An image analysis apparatus according to claim 1 having means for projecting an image for color and spectral analysis including a previously organized in order of presentation and position light which is projected directly onto the assigned photoreceptors by direction of a beam position or by timing, or a combination of beam position and timing.

4. An image display apparatus comprising,
an integrated circuit,
display means for projecting an image in parallel from the surface of said integrated circuit, including a plurality of photoemitters arranged in an array, each of said photoemitters having a plurality of current mirrors in a display circuit which provides output for display by said photoemitters.

5. An image display apparatus according to claim 4 having on it a spreading lens for projecting the image displayed on the surface of the integrated circuit display means.

6. An image display apparatus according to claim 4 having signal inputs for array areas on the integrated circuit for constructing an image in an array of light projections.

7. An image display apparatus according to claim 4 an array of light emitting diodes disposed in an array and a image construction circuit including current mirrors for constructing an image for input signals.

8. An image display apparatus according to claim 7 wherein the image construction circuit has an input signal port coupled to a PFET with shorted gate and drain such that the voltage at the gate is coupled to a PFET in each array position required for an image to be projected, to create the positive current.

9. An image display apparatus according to claim 7 wherein the image construction circuit has a PFET and NFET for creating a voltage for each pattern input signal ports which are coupled to image array positions to create a unique negative current at each position in an NFET.

10. An image display apparatus according to claim 7 wherein the image construction circuit has a line which collects appropriate currents which are determined by a pattern and couples it to a light emitting diode at a pixel array position.

11. An image analysis apparatus according to claim 1 wherein an image which may be projected onto the device includes a fingerprint, printed or handwritten material, video image, or other pattern which can make use of the integrated circuit computational capability for such needs as require quick and immediate discrimination of a large amount of data which can be turned into an image form.
